# EUROPEAN PATENT SPECIFICATION

(11) **EP 2 270 271 B1**
(45) Date of publication and mention of the grant of the patent: **04.03.2015**
(21) Application number: 09008335.3
(22) Date of filing: 25.06.2009
(51) Int. Cl.: D04H 3/00, D04H 13/00, B32B 5/26, C08K 5/10

(54) **High barrier nonwoven**
Vliesstoff mit hoher Sperreigenschaft
Barrière haute non tissée

(43) Date of publication of application: 05.01.2011
(73) Proprietor: Fibertex Personal Care A/S, 9220 Aalborg Øst (DK)
(72) Inventor: Hummelgaard, Lone Kondrup, 9000 Aalborg (DK); Udengaard, Brian, 8520 Lystrup (DK)
(74) Representative: Laufhütte, Dieter

(56) References cited:
- WO-A-02/09491
- WO-A-02/50347
- WO-A-99/00447
- WO-A-2007/103098
- US-A1- 2003 022 570
- US-A1- 2007 082 573
- US-A1- 2007 167 549

## Description

The present invention relates to a nonwoven web or nonwoven layer made of fibers, obtainable from a mixture of one or more polyolefins and a melt additive.

Hygiene applications such as baby diapers, feminine hygiene products, adult incontinence products, wipes, bandages and wound dressing as well as medical isolation gowns, surgical gowns, surgical drapes and covers, surgical scrub suits, surgical caps and other hygiene products such as panty liners or sanitary napkins or pads are well-known and used on a daily basis.

In connection with the above mentioned articles the use of polymer nonwoven fabrics as barrier material for different bodily fluids, such as, for example urine or other bodily secretions is common and well-known in the state of the art.

It is also commonly known that a decrease in pore size as well as a decrease in fiber diameter is beneficial to the liquid barrier properties of a nonwoven fabric. Imparting such properties to a nonwoven fabric has become increasingly common with the production of melt-blown nonwovens that render an opportunity to produce nonwoven fabrics with fibers that have extremely fine diameters. Since meltblown nonwovens have limited tensile strength they are usually combined with layers of spunbound nonwovens so as to reinforce the fabric. The resulting two or more layers are e.g. thermally bonded. Such layer products may be industrially produced in a continuous process. Common layering patterns include the SMS pattern, as well as patterns with more layers, such as e.g. SMMS, SMMMS or SSMMS patterns.

A further common approach already known from the state of the art is to increase the barrier properties of a nonwoven fabric with respect to liquid permeability by increasing the basis weight of the material. This is the obvious approach, however it is not very sophisticated since other properties like softness and weight of the respective products are altered in an unfavourable way.

It can therefore be concluded that it would be desirable to alter the properties of the material itself, especially with respect to manufacturing products with high barrier towards low surface tension liquids, such as for example running bowel movement (faeces from newborn babies), since the above mentioned techniques to increase the liquid barrier of a nonwoven are directed to the general use, meaning barrier properties towards mainly waterbased liquids with a relatively high surface tension e.g. urine or menstrual fluid. They do not show a sufficiently high barrier towards low surface tension liquids, which means that there is a higher risk of leakage, for example, from a diaper (a well-known phenomenon for most parents with infants).

A potential solution is to develop a material that has a lower intrinsic surface energy than the commonly used polymers. For the intended applications, such a lower intrinsic surface energy results in a significant improvement in low surface tension liquid strike through.

Common approaches to lower the surface energy of the material and thus allow for high values for low surface tension liquid strike through of a nonwoven fabricated therewith are silicon coating as well as the use of fluorine chemicals, as already known from the state of the art. The technique of silicone coating is for example used in the patent WO 2006/005769, which describes light-weight nonwoven barrier members that have been treated with a hydrophobic surface coating (silicone) intended to render such components impermeable to liquids having a relatively low surface tension. The main drawback of the use of silicone based coatings is that it is relatively difficult to employ them in a continuous production environment due to the extensive difficulties involved in cleaning after using silicone, as silicone is extremely difficult to dissolve, meaning that extensive manual labour is often necessary for cleaning. Also, the use of coatings necessitates an extra step in the production process, adding complexity and equipment cost.

The use of fluorine chemicals is an improvement over materials made from pure polypropylene with regard to the achievement of a lower intrinsic surface energy of the material and thus, for example, an increase in the barrier towards low surface tension liquids. This technique is for example disclosed in US 2003/0022570 A1. However, fluorine chemicals are generally frowned upon in the hygiene industry due to the risk of skin irritations resulting from the addition of some types of the respective chemicals, regardless their efficiency in lowering surface energy and thus in improving low surface tension liquid strike through.

From the above it becomes obvious that an optimum solution for a nonwoven material with excellent barrier properties towards low surface tension liquids in hygiene applications is yet to be found. It is, therefore, the goal of the present invention to tackle one or all of the drawbacks of the state of the art, and/or minimize the risk of leakage of low surface tension liquids through barrier sheets of body hygiene applications without using flourine based chemistry or coated materials, by employing an additive (a melt additive) which is put into the melt together with polymer granulate in a continuous process producing a spunbound/meltblown nonwoven fabric.

The application of melt additives to polymer fibers for nonwovens to impart a variety of properties to the product is known from US 2007/0082573 A1, from US 2007/0167549 A1 and from WO 99/00447 A1.

According to the present invention, one or all of these desirable properties can be achieved by a nonwoven web or nonwoven layer according to claim 1. Accordingly, the melt additive comprises triglyceride.

Due to this specific melt additive, a low intrinsic surface energy can be imparted to polymer material. Consequently, these melt additives can also impart an improved low surface tension liquid strike through to nonwovens that are fabricated with such a material.

The present invention encompasses a high barrier polymer nonwoven, characterized in that the surface energy of the polyolefin material is decreased by the use of triglycerides as melt additives. Representatives of some common triglycerides are triglycerides with all three hydroxy functional groups esterified with the same or different members of e.g. the group arachidec, stearic, palmitic, myristic, myristoleic, oleic, linoeic or arachidonic acid, as non-limiting examples, and other carboxylic acids or combinations thereof.

In the most preferred embodiment of the invention said triglyceride is glycerol tristearate (CAS No 555-43-1), also known by such names as tristearin or 1,2,3-Trioctadecanoylglycerol. In the following the name glycerol tristearate will be used, and in case of doubt the CAS No shall be seen as the primary identifier.

The lowering of the surface energy of the resulting polymer by the addition of glycerol tristearate is not obvious because glycerol tristearate has a surface energy of 34,2 mJ/m². Usually, a reduction in surface tension is achieved by the addition of chemicals with a lower surface energy than the respective polymer, e.g. fluorine chemicals. In one embodiment, the addition of lipid esters, preferably glycerol tristearate does not adversely effect the spinablity of the fibers on a spunmelt line (at a concentration of up to 10 %) and the addition of an additive is simple and elegant, not demanding extra steps in the production process as opposed to e.g. a coating procedure.

Table 1 summarizes the surface energy of some common polymers.

**Table 1:**

| **Polymer type** | **Surface Energy** |
|---|---|
| Isotactic polypropylene | 29.4 mJ/m² (20°C) |
| Atactic polypropylene | 29.4 mJ/m² (20°C) |
| Mixture of isotactic and atactic polypropylene | 30.1 mJ/m² (20°C) |
| Linear polyethylene (M_{w} = 67000) | 35.7 mJ/m² (20°C) |
| Branched polyethylene (Mₙ = 7000) | 35.3 mJ/m² (20°C) |
| Branched polyethylene (Mₙ = 2000) | 33.3 mJ/m² (20°C) |
| Poly(ethylene terephthalate) (Mₙ = 16000, M_{w} = 37000) | 44.6 mJ/m² (20°C) |

| | |
|---|---|
| Source: Brandrup, Immergut, Grulke (Editors), Polymer Handbook 4th edition, Wiley-Interscience, New York, 1999. | |

The fibers can be made of polyolefins and mixtures and blends thereof. Examples of suitable polyolefins include polypropylene or polyethylene or polyethylene-polypropylene copolymers.

The fibres may also be multicomponent fibres, including bicomponent fibres; a bicomponent fibre may be in a side-by-side, sheath-core, segmented pie, ribbon, or islands-in-the-sea configuration. The sheath may be continuous or non-continuous around the core. The sheath may comprise polypropylene. In one embodiment, polypropylene and polypropylene compositions are preferred, including homopolymers of propylene, copolymers of propylene, such as, for example, block, graft, random and alternating copolymers, terpolymers, etc., and blends and modifications thereof; polypropylene homopolymers, and copolymers of propylene with ethylene and/or butane may be suitably used, and polypropylene. In one embodiment, the polymers to be mixed with the additive are polymers that are not or hardly elastic.

The barrier sheet may comprise one or more nonwoven webs or layers made of fibers that do not comprise said additive. Such nonwoven webs and layers may be made of the thermoplastic polymers described above, and with the processes described above.

The fibres of one or more of the webs or layers herein may be nanofibers, with a diameter of less than 1000 nanometers. A layer or web may consist exclusively of nanofibers, or it may be mixed with fibers of a larger diameter. Alternatively, or in addition, the spunbond web or layer herein may for example have spunbond fibers with a number average fiber diameter of, for example, from 6 to 22 microns, or from 10 to 18 microns, or from 10 microns or 11 microns to 15 microns or to 14 microns. The meltblown web or layer herein may for example have meltblown fibers that have a number average fiber diameter from 1 to 5 microns, or 1 to 4 microns, or preferably from 1 to 3 microns.

One preferred polymer material is polypropylene linked with the help of a metallocene catalyst. Such metallocene-polypropylene polymers offer a much greater level of control than conservative polypropylene materials that are connected with the help of a Ziegler-Natta catalyst, because the metallocene molecules offer better control towards how the monomers are linked, so that a proper choice of catalysts can produce isotactic, syndiotactic or atactic polypropylene, or even a combination of these. Further still, they can also produce polypropylene materials with a much narrower molecular weight distribution than traditional Ziegler-Natta catalysts, which can further improve properties, especially in that the narrower molecular weight distribution allows a higher draw ratio, thus allowing thinner fibers to be spun.

In one preferred embodiment of the invention the high barrier nonwoven is manufactured by spunbound/meltblown layering. The use of the above mentioned polypropylene material is particularly useful for the production of nonwovens employing this technique because, as already mentioned, it allows thinner fibers to be spun. Furthermore, the additive has a lubricating effect in the extruder, which has a positive effect on processing conditions and stability. The highest effect of adding glycerol tristearate has been achieved in an SMMMS spunmelt, because the allowance for thinner spunbound fibers works in synergy with a second effect, being that three of these thin meltblown fibers are contained in an SMMMS spunmelt (MMM), as opposed to two meltblown beams (MM) as in an SMMS or SSMMS spunmelt. Employing three meltblown beams allows each of them to run at a lower throughput to obtain the same coverage (grams per m²). Thinner and more meltblown fibers result in a lower pore size of the nonwoven and a higher surface area of the fibers. A low pore size makes it more difficult for a liquid to penetrate the material and, as the additive blooms to the surface and is active with the surface, a high surface area of the fibers increases the effect of the melt additive.

The above mentioned facts render the advantages to use polymer layers in an SMMMS configuration. However, our invention also contemplates the use of other types of configurations like SMMS, SSMMS, and other configurations known to the skilled person. Nonwovens according to the present invention comprise at least one spunbound (S) or meltblown (M) polymer layer that is made of fibers comprising both said polymer material and said melt additive. In one embodiment, these fibers are obtainable from a mixture of the polymer material and the melt additive in their molten form. In a specific embodiment of the invention the nonwoven comprises at least one spunbound (S) or meltblown (M) polymer layer that is made of fibers comprising 90% w/w to 99.9% w/w of said polymer material and 0.1% w/w to 10% w/w of said melt additive, preferably 90% w/w to 99.5% w/w of said polymer material and 0.5% w/w to 10% w/w of said melt additive.

After spinning fibers, the additive can be present throughout their length and diameter (e.g. from the center to the surface). However, in one embodiment, the additive is present in a higher concentration at the surface than in the centre of the fibers. In one embodiment, the nonwoven web or barrier sheet or barrier component, comprising said fibers is heated by a heat source or radiated, or compressed, for example by nip rollers, during or after web formation, (e.g. in order to obtain this concentration gradient). This can be done across the whole width of the nonwoven barrier sheet or in specific lanes, zones or regions (herein referred to as regions). This can be done by the use of zoned compression rollers with varying diameters and nip gaps or pressures, or with heat zones in form of hot, profiled nip rollers, or infra-red heat sources, or other lanes or alternating regions of radiating energy. These deliberate activation steps can be employed during the nonwoven web production, or during the nonwoven barrier sheet production, or during storage or packaged transportation thereof, or during further processing thereof into a barrier component, or during final production of the absorbent article. Thus, in one embodiment the invention relates to absorbent articles with barrier components comprising a nonwoven barrier sheet, comprising a nonwoven web or layer of fibers, obtainable of a mixture of said thermoplastic polymers and said additive, whereby the fibers in one region of said layer or web have a higher concentration of additive on the surface of said fibers than in another region, said region being typically at least 1 mm²; said concentration difference being for example at least 10%, or at least 20% or at least 30%.

The present invention comprises, in one embodiment, nonwoven barrier sheets and/or barrier components that may have a pore size of less than 60 µm, preferably less than 50 µm, even more preferably less than 45 µm, but at least 1 µm, preferably at least 2 µm. In one preferred embodiment, the nonwoven barrier sheet and/or barrier component has a narrow pore size distribution. The nonwoven barrier sheet and/or barrier component may have pores of a mean flow pore size within the range of from 1 to 30 µm, and preferably from 5 to 20 µm.

A representative spunmelt nonwoven fabric made of standard polypropylene with an area weight of about 22g/m², as will be exemplified hereinafter, can for example have have a low surface tension liquid strike through (32 mJ/m²) of around 16 seconds (SMMS) or 26 seconds (SMMMS). The nonwoven barrier sheet and/or barrier component according to the present invention has in one embodiment a surface tension strike through value, as determined by the method described herein for a liquid of 32 mN/m surface tension, which has been increased by at least about 25% preferably by about 50%, even more preferably by more than about 100%, and yeteven more preferably by more than about 200%. The surface tension strike-through value may be limited optionally to less than 200 seconds, or less than 150 seconds or less than 100 seconds. A nonwoven barrier sheet or barrier component is considered to have the above low surface tension strike through values if it has this value at any part of the material, excluding areas comprising elastic material or edges being attached to other materials.

The very favourable properties with regard to low surface tension strike through, which can be seen in the examples and results, can be achieved without the addition of any fluorine based melt additives or any other fluorine based chemicals. Also, the present invention does not necessitate the coating of the material with silicone based materials or any other materials. However, the skilled person will be aware that the concerted use of the elements of the present invention with any of these processes may impart even lower surface energy to the material.

In one embodiment, the resulting high barrier polymer nonwoven shows an improved low surface tension liquid strike through, or in other words an increased barrier towards low surface tension liquids. The solution presented in the method above is convenient in terms of fabrication in comparison to silicone coating, as an additional coating step, additional equipment, or extra cleaning can be avoided. The additive does not contain fluorine, thus allowing to obtain the necessary reductions in surface energy to contain, for example, runny bowl movement without the use of questionable chemistry.

Besides lowering the surface energy and improving the low surface tension liquid strike through times of the spunmelt polypropylene nonwoven, some additional advantages can be imparted by the additives of the present invention. The nonwoven can become more drapeable and smooth due to the addition of the melt-additive described above, which in turn can lead to an improvement in perceived softness (this has been tested objectively using the Handle-O-Meter test method). Furthermore, the additive can have a lubricating effect in the extruder, which can have a positive effect on processing conditions and stability.

The barrier component may be used as an integral part to absorbent articles, and in one specific embodiment to absorbent hygiene articles. The absorbent hygiene article herein is preferably a panty liner or a sanitary napkin or pad, a baby diaper, a feminine hygiene product, an adult incontinence product, a wipe, a bandage or wound dressing, a medical isolation gown, surgical gown, surgical drape or cover, a surgical scrub suit or cap.

In one embodiment, the barrier component additionally comprises an ink composition, typically applied in a pattern, and/ or in the form of figure(s) and/ or letter(s), for example by printing. The ink composition may be an aqueous composition. This can be applied to barrier nonwovens sheet or barrier component despite the presence of fibers on the surface and despite the barrier nature and typically (e.g. hydrophobic) nature of these barrier components and nonwoven barrier sheets herein.

In one embodiment herein the barrier component may comprise a skin care composition, also referred to in the art as lotion or lotion composition. A portion of, or an entire surface of the barrier component may comprise on its surface (e.g. may be coated with) a skin care composition. Preferred may be that said barrier component comprises said skin care composition (or lotion) at least on the elasticated portions, described above, if present.

### Test methods:

### Basis Weight:

The basis weight herein can be measured consistent with ASTM D 756, ISO 536 and EDANA ERT-40.3-90. It is defined as mass per unit area, in g/ m² (also referred to gsm), and measured on the component or sheet as a whole, if possible with this method, or a sample thereof; the total sample surface area may be any size suitable for the test method, but preferably a sample of 100 cm² (± 0.5%) is used. The sample is conditioned at 23° Celsius (± 2°C) and at a relative humidity of 50% for 2 hours to reach equilibrium, prior to weight determination.

### Fiber Diameter:

The number average fiber diameters herein are determined by using a Scanning Electron Microscope (SEM) and its image analysis software. A magnification is chosen such that the fibers are suitably enlarged for measurements, e.g. between 1000 and 10,000. At least 100 fibers are measured, and the number average fiber diameter is calculated with the software and used herein.

### Maximum (largest) pore size and mean flow pore size determination:

The maximum pore size and mean flow pore size as used herein can be measured with a PMI Porometer in accordance with ASTM E1294-89 and F316-89 methods (capillary Constant as per ASTM method is 1; wetting fluid is Galwick, with Surface Tension of 15.9 mN/m; the surface tension of this fluid can be determined as set out herein below).

As Porometer, a PMI Capillary Flow Porometry, model CFP-1200-AEX, may suitably be used.

A wrinkle free, clean circular sample is obtained from the barrier component (which is free in the sample area of elastic material or film material, as described herein) or nonwoven barrier sheet (depending on which value needs to be tested in accord with the invention), having a diameter of 1.0 cm (conditioned for 2 hours at 20 °C, 50% relative humidity). Using tweezers, the sample is immersed the in petri dish filled with the Galwick 15.9 mN/m wetting fluid such that the fluid completely covers the sample, for 30 seconds. Then the sample is turned, using tweezers, and reimmersed in the same dish and fluid, for a further 30 seconds. This ensures complete saturation of the pores with the wetting fluid.

Then, using tweezers, the saturated sample is directly placed onto the O-ring of the lower sample adaptor, without allowing the wetting fluid to drain, ensuring that that the O-ring is completely covered by the sample, but without covering the gauze during placement of the sample.

With the O-ring and sample facing upwards on the lower adopter and facing the upper adaptor, the Porometer is further prepared as per its manual and the measurement is started according to manual. The apparatus' software will analyse the measurements and report the maximum pore size as used herein. It will also calculate the mean flow pore size.

### Handle-O-Meter Stiffness

The Handle-O-Meter Stiffness was measured according to the standard test method WSP 90.3.0 (05).

### Alcohol Repellency

Alcohol Repllency (AR) was measured by INDA IST 80.8.

INDA IST 80.8. is a standard test method for measuring the resistance of nonwoven fabrics to penetration by aqueous isopropanol solutions. The alcohol repellency was reported in ratings based upon alcohol concentrations. The highest number of test solutions that did not penetrate the tested fabric within five minutes was recorded.

### Low surface tension Strike Through (LST. ST) value method

The low surface tension strike through value referred to herein may be obtained by the Edana method WSP70.3 (05), except that a low surface tension liquid (see below) is used and a sample of 1 inch x 1 inch (25 mm x 25 mm) may be used. The sample should be free of elastic material or of edges that are connected to other materials.

The value obtained from this sample measurement is reported herein.

The low surface tension liquid is a liquid with a surface tension of 32 mN/m prepared as follows:

In a clean flask, 2.100 grams of Triton-X-100 is added to 500 ml distilled water (already in flask) and then 5000 ml distilled water is added. The solution is mixed for 30 minutes and then the surface tension is measured, which should be 32 mN/m.

(The surface tension may be determined by method: ASTM D1331-56 ("Standard test method for surface and interfacial tension of solution of surface active agents") using a Kruss K12 tensiometer.)

The following examples and figures are set forth for the purpose of illustrating our invention in more detail.

### Figures:

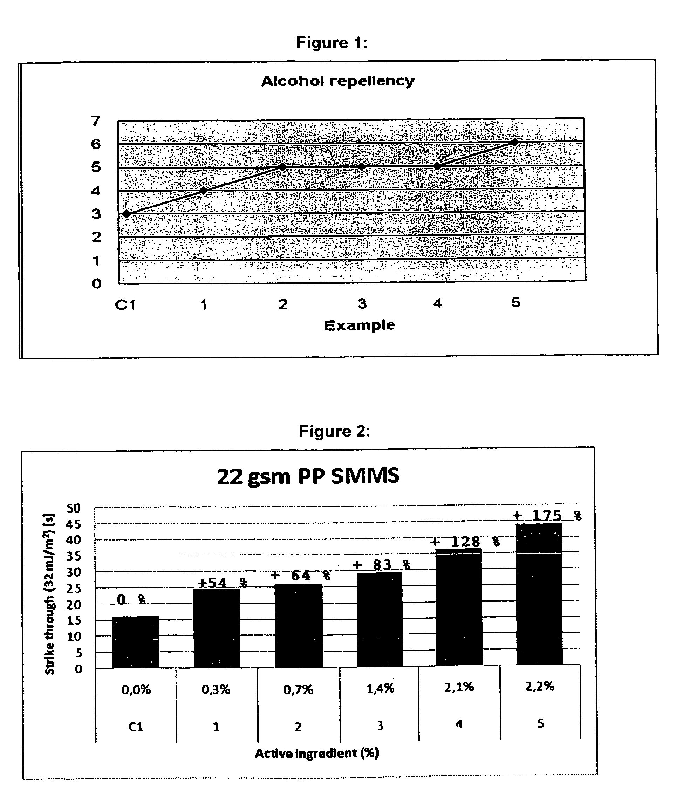

Figure 1 is a graphical representation of the alcohol repellency of comparative example 1 and examples 1 through 5.

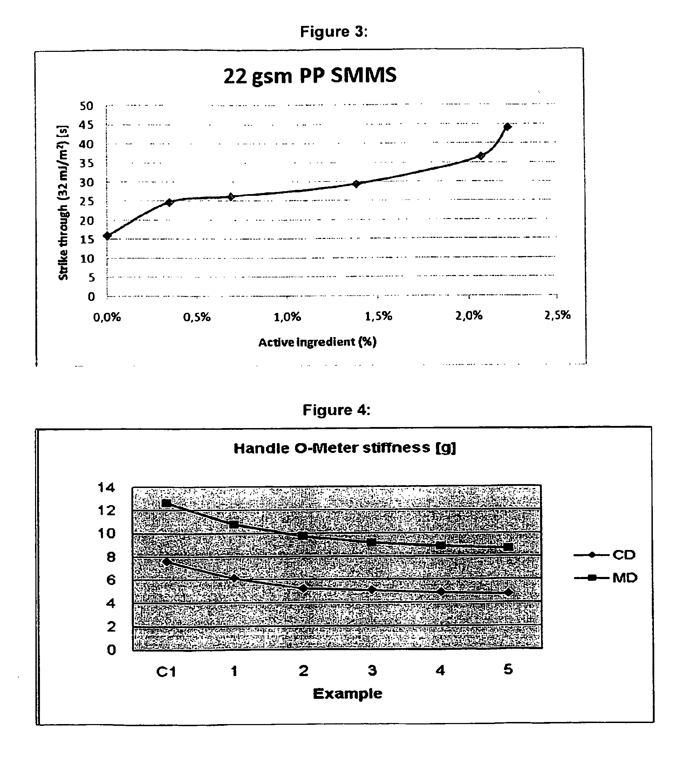

Figures 2 and 3 are graphical representations of the liquid strike through (32 mJ/m²) in seconds for comparative example 1 and examples 1 through 5. The LST is shown depending on the percentual values for active ingredient in the respective examples. Figure 2 also indicates the percentual increase in LST as compared to comparative example 1.
Figure 4 is a graphical representation of the handle-o-meter stiffness [g] of comparative example 1 and examples 1 through 5.

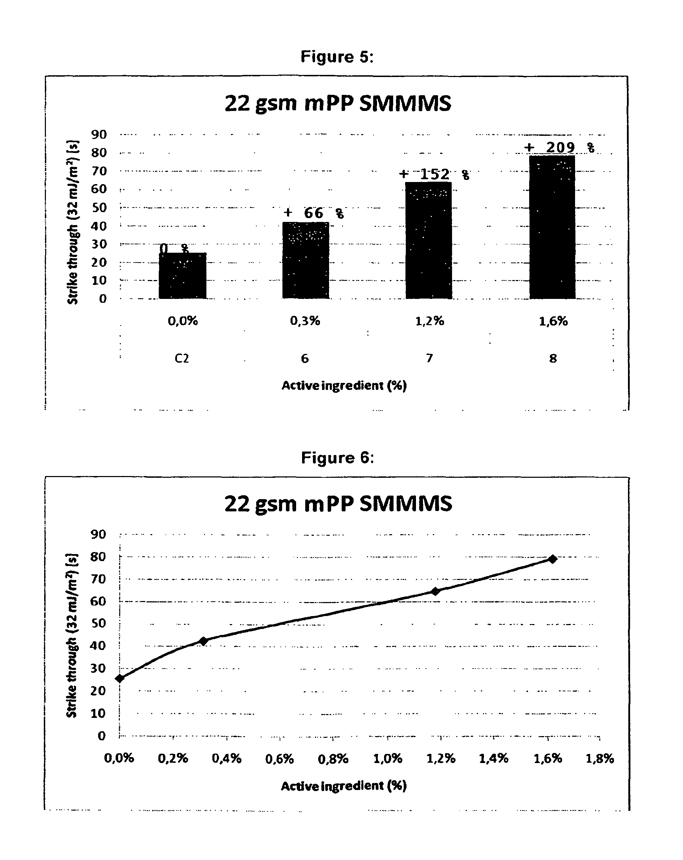

Figures 5 and 6 are graphical representations of the liquid strike through (32 mJ/m²) in seconds for comparative example 2 and examples 6 through 8. The LST is shown depending on the percentual values for active ingredient in the respective examples. Figure 5 also indicates the percentual increase in LST as compared to comparative example 2.

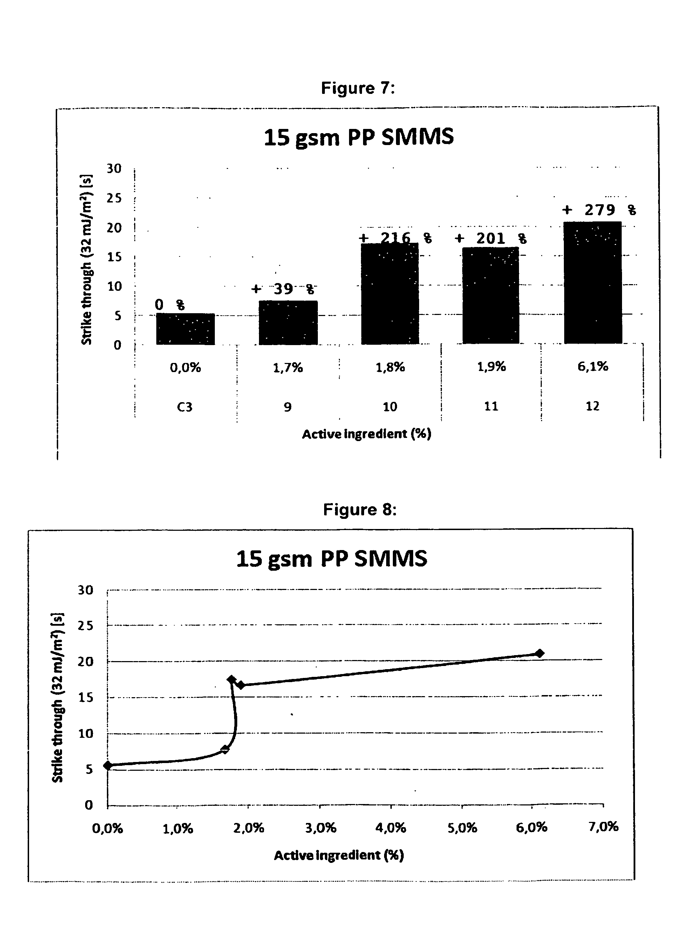

Figures 7 and 8 are graphical representations of the liquid strike through (32 mJ/m²) in seconds for comparative example 3 and examples 9 through 12. The LST is shown depending on the percentual values for active ingredient in the respective examples. Figure 7 also indicates the percentual increase in LST as compared to comparative example 3.

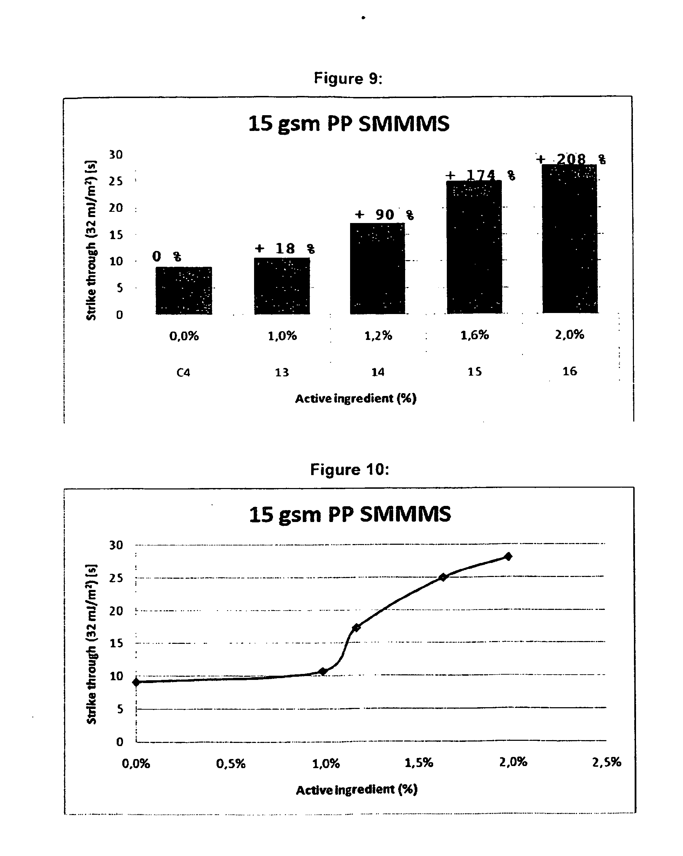

Figures 9 and 10 are graphical representations of the liquid strike through (32 mJ/m²) in seconds for comparative example 4 and examples 13 through 16. The LST is shown depending on the percentual values for active ingredient in the respective examples. Figure 9 also indicates the percentual increase in LST as compared to comparative example 4.

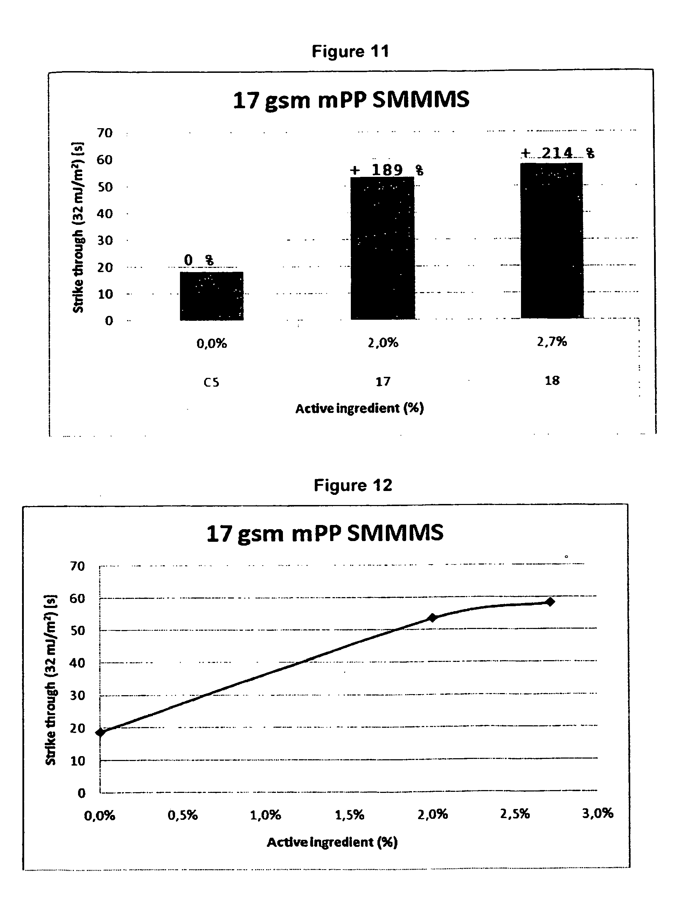

Figures 11 and 12 are graphical representations of the liquid strike through (32 mJ/m²) in seconds for comparative example 5 and examples 17 and 18. The LST is shown depending on the percentual values for active ingredient in the respective examples. Figure 11 also indicates the percentual increase in LST as compared to comparative example 5.

### Examples:

Comparative Examples 1 to 5 aim to illustrate the state of the art in comparison to Examples 1 to 19, which aim to illustrate the properties of the nonwoven that can be achieved by using the method disclosed in the present invention.

### Comparative Example 1:

An SMMS multilayer nonwoven was produced from Ziegler-Natta polypropylene in a continuous production on a 4,5 m wide Reifenhäuser Reicofil 3 SMMS line. Each layer of S-layers had a weight of 9,5 g/m² and each of the M layers had a weight of 1,5 g/m², resulting in a thermally bonded SMMS layered nonwoven product having a total weight per area of 22 g/m².

In each of the following five Examples the single layers of the SMMS sheet will be denoted as indicated in parentheses: S(1)M(2)M(3)S(4).

### Example 1

A layered fabric was produced following the process described in Comparative Example 1, where the polymer forming Layer 4 contained 0.8% w/w of glycerol tristearate as an additive component, hereinafter referred to as "active ingredient", resulting in an average weight percentage of 0.3% w/w of active ingredient in the total fabric.

### Example 2

A layered fabric was produced as described in Example 1, where the polymer forming each of the Layers 1 and 4 contained 0.8% w/w of active ingredient, resulting in an average weight percentage of 0.7% w/w of active ingredient in the total fabric.

### Example 3

A layered fabric was produced as described in Example 1, where the polymer forming each of the Layers 1 and 4 contained 1.6% w/w of active ingredient, resulting in an average weight percentage of 1.4% w/w of active ingredient in the total fabric.

### Example 4

A layered fabric was produced as described in Example 1, where the polymer forming each of the layers 1 and 4 contained 2.4% w/w of active ingredient, resulting in an average weight percentage of 2.1 % w/w of active ingredient in the total fabric.

### Example 5

A layered fabric was produced according to Example 1, where the polymer forming each of the Layers 1, 2 and 4 contained 2.4% w/w of active ingredient, resulting in an average weight percentage of 2.2% w/w of active ingredient in the total fabric. The contents of active ingredient of Comparative Example 1 as well as of Examples 1 through 5 are summarized in Table 2.

**Table 2:**

| | Lay-up [g] | | | | Configuration |
|---|---|---|---|---|---|
| | **S** | **M** | **M** | **S** | **SMMS** |
| | 9.5 | 1.5 | 1.5 | 9.5 | 22 g |
| **Example** | **Active ingredient per beam [%]** | | | | **Average [%]** |
| C1 | 0 | 0 | 0 | 0 | 0.0 |
| 1 | 0 | 0 | 0 | 0.8 | 0.3 |
| 2 | 0.8 | 0 | 0 | 0.8 | 0.7 |
| 3 | 1.6 | 0 | 0 | 1.6 | 1.4 |
| 4 | 2.4 | 0 | 0 | 2.4 | 2.1 |
| 5 | 2.4 | 2.4 | 0 | 2.4 | 2.2 |

The following tests were carried out according to the methods introduced in the section "Test Methods" to assess the Alcohol Repellency Properties, the Strike Through (32 mJ/m²) Properties, the Handle-O-Meter CD (cross-directional) Stiffness and the Handle-O-Meter MD (machine-directional) Stiffness. The corresponding results are summarized in Tables 3 to 6 and Figures 1 to 4.

The Alcohol Repellency was measured for Comparative Example 1 as well as Examples 1 to 5 and the results are shown in Table 3 and Figure 1.

**Table 3:**

| | **Alcohol Repellency** | | | | | |
|---|---|---|---|---|---|---|
| Example | C1 | 1 | 2 | 3 | 4 | 5 |
| | 3 | 4 | 5 | 5 | 5 | 6 |
| | 3 | 4 | 6 | 5 | 5 | 6 |
| | 3 | 4 | 5 | 5 | 6 | 6 |
| | 3 | 4 | 5 | 6 | 5 | 6 |
| | 3 | 4 | 6 | 5 | 6 | 6 |
| **Resulting** | **3** | **4** | **5** | **5** | **5** | **6** |

The strike through (32 mJ/m²) was measured for Comparative Example 1 as well as Examples 1 to 5 and the results are shown in Table 4 and Figures 2 and 3.

**Table 4:**

| **Example** | **C1** | **1** | **2** | **3** | **4** | **5** |
|---|---|---|---|---|---|---|
| **Strike through (32 mJ/m²) [s]** | **16.04** | **24.72** | **26.25** | **29.41** | **36.51** | **44.14** |
| **Increase of LST ST [%]** | **0** | **54** | **64** | **83** | **128** | **175** |

The Handle-O-Meter CD-Stiffness as well as the Handle-O-Meter MD-Stiffness were measured for Comparative Example 1 as well as for Examples 1 to 5 and the respective values are given in Tables 5 and 6 as well as Figure 4.

**Table 5:**

| | **Handle-o-Meter CD-stiffness [g]** | | | | | |
|---|---|---|---|---|---|---|
| Example | C1 | 1 | 2 | 3 | 4 | 5 |
| | 7,9 | 6,6 | 6,0 | 5,0 | 5,1 | 4,9 |
| | 8,7 | 5,9 | 5,0 | 5,5 | 4,4 | 4,8 |
| | 7,3 | 6,0 | 5,4 | 5,0 | 4,9 | 5,1 |
| | 8,1 | 6,0 | 5,3 | 4,6 | 4,9 | 5,0 |
| | 5,9 | 6,1 | 4,4 | 5,3 | 5,1 | 4,0 |
| **Average** | **7,6** | **6,1** | **5,2** | **5,1** | **4,9** | **4,8** |
| Std dev | 1,1 | 0,3 | 0,6 | 0,3 | 0,3 | 0,4 |
| Min | 5,9 | 5,9 | 4,4 | 4,6 | 4,4 | 4,0 |
| Max | 8,7 | 6,6 | 6,0 | 5,5 | 5,1 | 5,1 |

**Table 6:**

| | **Handle-o-Meter MD-stiffness [g]** | | | | | |
|---|---|---|---|---|---|---|
| Example | C1 | 1 | 2 | 3 | 4 | 5 |
| | 11,6 | 10,4 | 9 | 10,1 | 9,9 | 8,7 |
| | 13,9 | 11,0 | 8,8 | 9,9 | 8 | 9,6 |
| | 12,3 | 10,9 | 10 | 7,9 | 8,7 | 8,8 |
| | 13,3 | 10,7 | 10 | 9,3 | 9,1 | 8,2 |
| | 11,9 | 10,8 | 10,8 | 8,6 | 8,5 | 8,0 |
| **Average** | **12,6** | **10,8** | **9,7** | **9,2** | **8,8** | **8,7** |
| Std dev | 1,0 | 0,2 | 0,8 | 0,9 | 0,7 | 0,6 |
| Min | 11,6 | 10,4 | 8,8 | 7,9 | 8,0 | 8,0 |
| Max | 13,9 | 11,0 | 10,8 | 10,1 | 9,9 | 9,6 |

### Comparative Example 2:

An SMMMS multilayer nonwoven was produced from metallocene-polypropylene in a continuous production on a 4.5 m wide Reifenhäuser Reicofil 4 SMMMS line. Each layer of S-layers had a weight of 9,5 g/m² and each of the M layers had a weight of 1,0 g/m², resulting in a thermally bonded SMMMS layered nonwoven product having a total weight per area of 22 g/m².

In each of the following three Examples, the single layers of the SMMMS sheet will be denoted as indicated in parentheses: S(1)M(2)M(3)M(4)S(5).

### Example 6

A layered fabric was produced following the process described in Comparative Example 2, where the polymers forming Layers 2, 3 and 4 contained 2.3% w/w of active ingredient, resulting in an average weight percentage of 0.3% w/w of active ingredient in the total fabric.

### Example 7

A layered fabric was produced as described in Example 6, where the polymers forming each of the Layers 2, 3 and 4 contained 2.3% w/w and the one forming Layer 5 contained 2.0% w/w of active ingredent of active ingredient, resulting in an average weight percentage of 1.2 % w/w of active ingredient in the total fabric.

### Example 8

A layered fabric was produced as described in Example 6, where the polymers forming each of the Layers 2, 3 and 4 contained 2.3% w/w, and the one forming Layer 5 contained 3.0% w/w of active ingredient, resulting in an average weight percentage of 1.6% w/w of active ingredient in the total fabric.

The content af active ingredient of Comparative Example 2 as well as Examples 6 through 8 are summarized in Table 7.

**Table 7:**

| | Lay-up [g] | | | | | Configuration |
|---|---|---|---|---|---|---|
| | **S** | **M** | **M** | **M** | **S** | **SMMMS** |
| | 9.5 | 1 | 1 | 1 | 9.5 | 22 g |
| **Example** | **Active ingredient per beam [%]** | | | | | **Average [%]** |
| C2 | 0.0 | 0.0 | 0.0 | 0.0 | 0.0 | 0.0 |
| 6 | 0.0 | 2.3 | 2.3 | 2.3 | 0.0 | 0.3 |
| 7 | 0.0 | 2.3 | 2.3 | 2.3 | 2.0 | 1.2 |
| 8 | 0.0 | 2.3 | 2.3 | 2.3 | 3.0 | 1.6 |

The following tests were carried out according to the method introduced in the section "Test Methods" to assess the Strike Through (32 mJ/m²) Properties. The Strike Through (32 mJ/m²) was measured for Comparative Example 2 as well as Examples 6 to 8 and the results are shown in Table 8 and Figures 5 to 6.

**Table 8:**

| **Example** | **C2** | **6** | **7** | **8** |
|---|---|---|---|---|
| **Strike through (32 mJ/m²) [s]** | **25,59** | **42,42** | **64,57** | **79,17** |
| **Increase of LST ST [%]** | **0** | **66** | **152** | **209** |

### Comparative Example 3:

An SMMS multilayer nonwoven was produced from Ziegler-Natta polypropylene in a continuous production on a 4,5 m wide ReifenhAuser Reicofil 3 SMMS line. Each lay-up of S-layers had a weight of 6,9 g/m² and each of the M layers had a weight of 0,6 g/m², resulting in a thermally bonded SMMS layered nonwoven product having a total weight per area of 15 g/m².

In each of the following four Examples the single layers of the SMMS sheet will be denoted as indicated in parentheses: S(1)M(2)M(3)S(4).

### Example 9

A layered fabric was produced as described in Comparative Example 3, where the polymers forming each of the Layers 2 and 3 contained 7.6% w/w and the one forming Layer 4 contained 2.3% w/w of active ingredent, resulting in an average weight percentage of 1.7% w/w of active ingredient in the total fabric.

### Example 10

A layered fabric was produced as described in Example 9, where the polymers forming each of the Layers 2, and 3 contained 2.5% w/w and the one forming Layer 4 contained 3.4% w/w of active ingredent, resulting in an average weight percentage of 1.8% w/w of active ingredient in the total fabric.

### Example 11

A layered fabric was produced as described in Example 9, where the polymers forming Layer 1 contained 6.0 % and the one forming Layers 2, and 3 contained 7.6% w/w and the one forming Layer 4 contained 6.0% w/w of active ingredent, resulting in an average weight percentage of 6.1 % w/w of active ingredient in the total fabric.

### Example 12

A layered fabric was produced as described in Example 9, where the polymers forming Layer 4 contained 4.1 % of active ingredent, resulting in an average weight percentage of 1.9% w/w of active ingredient in the total fabric.

The active ingredient contents of Comparative Example 3 as well as of Examples 9 through 12 are summarized in Table 9.

**Table 9:**

| | Lay-up [g] | | | | Configuration |
|---|---|---|---|---|---|
| | **S** | **M** | **M** | **S** | **SMMS** |
| | 6.9 | 0.6 | 0.6 | 6.9 | 15 g |
| **Example** | **Active ingredient per beam [%]** | | | | **Average [%]** |
| C3 | 0.0 | 0.0 | 0.0 | 0.0 | 0.0 |
| 9 | 0.0 | 7.6 | 7.6 | 2.3 | 1.7 |
| 10 | 0.0 | 2.5 | 2.5 | 3.4 | 1.8 |
| 11 | 6.0 | 7.6 | 7.6 | 6.0 | 6.1 |
| 12 | 0.0 | 0.0 | 0.0 | 4.1 | 1.9 |

The Strike Through test was carried out according to the methods introduced in the section "Test Methods" to assess the Strike Through (32 mJ/m²) Properties. The corresponding results for Comparative Example 3 as well as Examples 9 to 12 are summarized in Table 10 and Figures 7 and 8.

**Table 10:**

| **Example** | **C3** | **9** | **10** | **11** | **12** |
|---|---|---|---|---|---|
| **Strike through (32 mJ/m²) [s]** | **5,52** | **7.69** | **17.42** | **20.93** | **16.62** |
| **Increase of LST ST [%]** | **0** | **39** | **216** | **201** | **279** |

### Comparative Example 4:

An SMMMS multilayer nonwoven was produced from Ziegler-Natta polypropylene in a continuous production on a 4,5 m wide Reifenhäuser Reicofil 4 SMMMS line. Each lay-up of S-layers had a weight of 6.3 g/m² and each of the M layers had a weight of 0.8 g/m², resulting in a thermally bonded SMMMS layered nonwoven product having a total weight per area of 15 g/m².

In each of the following four Examples the single layers of the SMMS sheet will be denoted as indicated in parentheses: S(1)M(2)M(3)M(4)S(5).

### Example 13

A layered fabric was produced as described in Comparative Example 4, where the polymers forming each of the Layers 2, 3 and 4 contained 1.2% w/w and the one forming Layer 5 contained 1.9% w/w of active ingredent, resulting in an average weight percentage of 1.0 % w/w of active ingredient in the total fabric.

### Example 14

A layered fabric was produced as described in Example 13, where the polymers forming each of the Layers 2, 3 and 4 contained 2.4% w/w and the one forming Layer 5 contained 1.9% w/w of active ingredent, resulting in an average weight percentage of 1.2 % w/w of active ingredient in the total fabric.

### Example 15

A layered fabric was produced as described in Example 13, where the polymers forming each of the Layers 2, 3 and 4 contained 2.4% w/w and the one forming Layer 5 contained 3.0% w/w of active ingredent, resulting in an average weight percentage of 1.6 % w/w of active ingredient in the total fabric.

### Example 16

A layered fabric was produced as described in Example 13, where the polymers forming each of the Layers 2, 3 and 4 contained 2.4% w/w and the one forming Layer 5 contained 3.8% w/w of active ingredent, resulting in an average weight percentage of 2.0 % w/w of active ingredient in the total fabric.

The active ingredient contents of Comparative Example 4 as well as of Examples 13 through 16 is summarized in Table 11.

**Table 11:**

| | Lay-up [g] | | | | | Configuration |
|---|---|---|---|---|---|---|
| | **S** | **M** | **M** | **M** | **S** | **SMMMS** |
| | 6.3 | 0.8 | 0.8 | 0.8 | 6.3 | 15 g |
| **Example** | **Active ingredient per beam [%]** | | | | | **Average [%]** |
| C4 | 0.0 | 0.0 | 0.0 | 0.0 | 0.0 | 0.0 |
| 13 | 0 | 1.2 | 1.2 | 1.2 | 1.9 | 1.0 |
| 14 | 0 | 2.4 | 2.4 | 2.4 | 1.9 | 1.2 |
| 15 | 0 | 2.4 | 2.4 | 2.4 | 3.0 | 1.6 |
| 16 | 0.0 | 2.4 | 2.4 | 2.4 | 3.8 | 2.0 |

The Strike Through test was carried out according to the methods introduced in the section "Test Methods" to assess the Strike Through (32 mJ/m²) Properties. The corresponding results for Comparative Example 4 as well as Examples 13 to 16 are summarized in Table 12 and Figures 9 and 10.

**Table 12:**

| **Example** | **C4** | **13** | **14** | **15** | **16** |
|---|---|---|---|---|---|
| **Strike through (32 mJ/m²) [s]** | **9.12** | **10.75** | **17.33** | **25.01** | **28.05** |
| **Increase of LST ST [%]** | **0** | **18** | **90** | **174** | **208** |

### Comparative Example 5:

An SMMMS multilayer nonwoven was produced from metallocene-polypropylene in a continuous production on a 4.5 m wide Reifenhauser Reicofil 4 SMMMS line. Each layer of S-layers had a weight of 6.5 g/m² and each of the M layers had a weight of 1.3 g/m², resulting in a thermally bonded SMMMS layered nonwoven product having a total weight per area of 17 g/m².

In each of the following two Examples, the single layers of the SMMMS sheet will be denoted as indicated in parentheses: S(1)M(2)M(3)M(4)S(5).

### Example 17

A layered fabric was produced as described in Comparative Example 5, where the polymers forming each of the Layers 2, 3 and 4 contained 2.9% w/w and the one forming Layer 5 contained 3.5% w/w of active ingredent of active ingredient, resulting in an average weight percentage of 2.0 % w/w of active ingredient in the total fabric.

### Example 18

A layered fabric was produced as described in Example 17, where the polymers forming each of the Layers 2, 3 and 4 contained 3.9% w/w, and the one forming Layer 5 contained 4.8% w/w of active ingredient, resulting in an average weight percentage of 2.7% w/w of active ingredient in the total fabric.

The content af active ingredient of Comparative Example 5 as well as Examples 17 through 18 are summarized in Table 13.

**Table 13:**

| | Lay-up [g] | | | | | Configuration |
|---|---|---|---|---|---|---|
| | **S** | **M** | **M** | **M** | **S** | **SMMMS** |
| | 6.5 | 1.3 | 1.3 | 1.3 | 6.5 | 17 g |
| **Example** | **Active ingredient per beam [%]** | | | | | **Average [%]** |
| C5 | 0.0 | 0.0 | 0.0 | 0.0 | 0.0 | 0.0 |
| 17 | 0.0 | 2.9 | 2.9 | 2.9 | 3.5 | 2.0 |
| 18 | 0.0 | 3.9 | 3.9 | 3.9 | 4.8 | 2.7 |

The Strike Through test was carried out according to the methods introduced in the section "Test Methods" to assess the Strike Through (32 mJ/m²) Properties. The corresponding results for Comparative Example 5 as well as Examples 17 to 18 are summarized in Table 14 and Figures 11 to 12.

**Table 14:**

| **Example** | **C5** | **17** | **18** |
|---|---|---|---|
| **Strike through (32 mJ/m²) [s]** | **18,53** | **53,50** | **58,24** |
| **Increase of LST ST [%]** | **0** | **189** | **214** |

As laid out in tables 4, 8, 10, 12 and14 and shown in figures 2, 5, 7, 9 and 11, the nonwoven fabrics according to the present invention show a percentual increase in LST of more than 25%, in most cases more than 50%, in some cases more than 100% and in some cases even more than 200% as compared to fabrics without the additive component according to claim 1, for both SMMS and SMMMS layered fabrics with differend area weights. As such, a nonwoven fabric according to the present invention can have twice or even three times the LST as compared to fabrics without the additive component according to claim 1.

## Claims

1. A nonwoven web or nonwoven layer made of fibers, obtainable from a mixture of one or more polyolefins and a melt additive, **characterized by** the additive component comprising a triglyceride.

2. Nonwoven web or nonwoven layer as of any of the preceding claims, whereby the additive component comprises glycerol tristearate.

3. Nonwoven web or nonwoven layer as of any of the preceding claims, whereby the polyolefins comprise isotactic polyolefins.

4. Nonwoven web or nonwoven layer as of any of the preceding claims, whereby the polyolefins comprise polypropylene.

5. Nonwoven web or nonwoven layer as of any of the preceding claims, whereby the polyolefins comprise polypropylene synthesized with a metallocene catalyst.

6. Nonwoven web or nonwoven layer as of any of the preceding claims, whereby the nonwoven is a thermally bonded, layered fabric of two or more spunbound (S) and/or meltblown (M) polymer layers.

7. Nonwoven web or nonwoven layer as of any of the preceding claims, whereby the spunbound (S) and meltblown (M) polymer layers are arranged in the order SMMS, SSMMS or SMMMS.

8. Nonwoven web or nonwoven layer as of any of the preceding claims, whereby the Low Surface Tension Strike Through (32 mJ/m²) of the nonwoven is increased by more than 25%.

9. Nonwoven web or nonwoven layer as of any of the preceding claims, whereby the Low Surface Tension Strike Through (32 mJ/m²) of the nonwoven is increased by more than 50%.

10. Nonwoven web or nonwoven layer as of any of the preceding claims, whereby the Low Surface Tension Strike Through (32 mJ/m²) of the nonwoven is increased by more than 100%.

11. Nonwoven web or nonwoven layer as of any of the preceding claims, whereby the Low Surface Tension Strike Through (32 mJ/m²) of the nonwoven is increased by more than 200%.

12. Nonwoven web or nonwoven layer as of any of the preceding claims, additionally comprising a skin care composition and/or an ink composition.

13. Nonwoven web or nonwoven layer as of any of the preceding claims, comprising spunbond layer(s) and/or meltblown layer(s), wherein at least one layer is made of fibers obtainable from a mixture of 90% to 99.5% by weight of said thermoplastic polyolefin polymer and from 0.5% to 10% by weight of said melt additive.

## Patentansprüche

1. Vliesbahn oder Vliesschicht aus Fasern, die aus einer Mischung von einem oder mehreren Polyolefinen und einem Schmelzzusatz erhaltbar sind, **dadurch gekennzeichnet, dass** die Zusatzkomponente ein Triglycerid umfasst.

2. Vliesbahn oder Vliesschicht nach einem der vorhergehenden Ansprüche, wobei die Zusatzkomponente Glyceroltristearat umfasst.

3. Vliesbahn oder Vliesschicht nach einem der vorhergehenden Ansprüche, wobei die Polyolefine isotaktische Polyolefine umfassen.

4. Vliesbahn oder Vliesschicht nach einem der vorhergehenden Ansprüche, wobei die Polyolefine Polypropylen umfassen.

5. Vliesbahn oder Vliesschicht nach einem der vorhergehenden Ansprüche, wobei die Polyolefine Polypropylen, das mit einem Metallocen-Katalysator synthetisiert ist, umfassen.

6. Vliesbahn oder Vliesschicht nach einem der vorhergehenden Ansprüche, wobei das Vlies ein thermisch gebondeter Lagenstoff aus zwei oder mehr Spinnvlies(S)- und/oder Meltblown(M)-Polymerschichten ist.

7. Vliesbahn oder Vliesschicht nach einem der vorhergehenden Ansprüche, wobei die Spinnvlies(S)- und Meltblown(M)-Polymerschichten in der Reihenfolge SMMS, SSMMS oder SMMMS angeordnet sind.

8. Vliesbahn oder Vliesschicht nach einem der vorhergehenden Ansprüche, wobei der Durchtritt bei geringer Oberflächenspannung (32 mJ/m²) des Vlieses um mehr als 25% gesteigert ist.

9. Vliesbahn oder Vliesschicht nach einem der vorhergehenden Ansprüche, wobei der Durchtritt bei geringer Oberflächenspannung (32 mJ/m²) des Vlieses um mehr als 50% gesteigert ist.

10. Vliesbahn oder Vliesschicht nach einem der vorhergehenden Ansprüche, wobei der Durchtritt bei geringer Oberflächenspannung (32 mJ/m²) des Vlieses um mehr als 100% gesteigert ist.

11. Vliesbahn oder Vliesschicht nach einem der vorhergehenden Ansprüche, wobei der Durchtritt bei geringer Oberflächenspannung (32 mJ/m²) des Vlieses um mehr als 200% gesteigert ist.

12. Vliesbahn oder Vliesschicht nach einem der vorhergehenden Ansprüche, welche zusätzlich eine Hauptpflegezusammensetzung und/oder eine Farbzusammensetzung umfasst.

13. Vliesbahn oder Vliesschicht nach einem der vorhergehenden Ansprüche, welche Spinnvliesschicht(en) und/oder Meltblown-Schicht(en) umfasst, wobei mindestens eine Schicht aus Fasern besteht, die aus einer Mischung von 90 bis 99,5 Gewichtsprozent des thermoplastischen Polyolefinpolymers und aus 0,5 bis 10 Gewichtsprozent des Schmelzzusatzes erhaltbar sind.

## Revendications

1. Bande de non-tissé ou couche de non-tissé constituée de fibres, pouvant être obtenue à partir d'un mélange d'une ou plusieurs polyoléfines et d'un additif de fusion, **caractérisée par** le composant additif comprenant un triglycéride.

2. Bande de non-tissé ou couche de non-tissé selon l'une quelconque des revendications précédentes, dans laquelle le composant additif comprend du tristéarate de glycérol.

3. Bande de non-tissé ou couche de non-tissé selon l'une quelconque des revendications précédentes, dans laquelle les polyoléfines comprennent des polyoléfines isotactiques.

4. Bande de non-tissé ou couche de non-tissé selon l'une quelconque des revendications précédentes, dans laquelle les polyoléfines comprennent du polypropylène.

5. Bande de non-tissé ou couche de non-tissé selon l'une quelconque des revendications précédentes, dans laquelle les polyoléfines comprennent du pdlypropylène synthétisé avec un catalyseur à métallocène.

6. Bande de non-tissé ou couche de non-tissé selon l'une quelconque des revendications précédentes, dans laquelle le non-tissé est un tissu stratifié multicouche thermocollé de deux couches ou plus de polymère filé-lié (S) et/ou fondu-soufflé (M).

7. Bande de non-tissé ou couche de non-tissé selon l'une quelconque des revendications précédentes, dans laquelle les couches de polymère filé-lié (S) et fondu-soufflé (M) sont agencées dans l'ordre SMMS, SSMMS ou SMMMS.

8. Bande de non-tissé ou couche de non-tissé selon l'une quelconque des revendications précédentes, dans laquelle la pénétration à tension superficielle faible (32 mJ/m²) du non-tissé est augmentée de plus de 25 %.

9. Bande de non-tissé ou couche de non-tissé selon l'une quelconque des revendications précédentes, dans laquelle la pénétration à tension superficielle faible (32 mJ/m²) du non-tissé est augmentée de plus de 50 %.

10. Bande de non-tissé ou couche de non-tissé selon l'une quelconque des revendications précédentes, dans laquelle la pénétration à tension superficielle faible (32 mJ/m²) du non-tissé est augmentée de plus de 100 %.

11. Bande de non-tissé ou couche de non-tissé selon l'une quelconque des revendications précédentes, dans laquelle la pénétration à tension superficielle faible (32 mJ/m²) du non-tissé est augmentée de plus de 200 %.

12. Bande de non-tissé ou couche de non-tissé selon l'une quelconque des revendications précédentes, comprenant en outre une composition de soin cutané et/ou une composition d'encre.

13. Bande de non-tissé ou couche de non-tissé selon l'une quelconque des revendications précédentes, comprenant une/des couche(s) filée(s)-liée(s) et/ou fondue(s)-soufflée(s), dans laquelle au moins une couche est constituée de fibres pouvant être obtenues à partir d'un mélange de 90 % à 99,5 % en poids dudit polymère de polyoléfine thermoplastique et de 0,5 % à 10 % en poids dudit additif de fusion.
